# EUROPÄISCHE PATENTSCHRIFT

(11) **EP 2 281 183 B1**
(45) Veröffentlichungstag und Bekanntmachung des Hinweises auf die Patenterteilung: **04.01.2012**
(21) Anmeldenummer: 09734502.9
(22) Anmeldetag: 26.02.2009
(51) Int. Cl.: G01L 9/00

(54) **LUFTDRUCKSENSOR ZUR AUFPRALLERKENNUNG**
AIR PRESSURE SENSOR FOR IMPACT DETECTION
CAPTEUR DE PRESSION D'AIR POUR DÉTECTER UNE COLLISION

(30) Priorität: 25.04.2008 DE 102008001393
(43) Veröffentlichungstag der Anmeldung: 09.02.2011
(73) Patentinhaber: Robert Bosch GmbH, 70442 Stuttgart (DE)
(72) Erfinder: ADAM, Boris, 71126 Gaeufelden (DE); SCHUERER, Martin, 72631 Aichtal (DE)
(86) Internationale Anmeldenummer: PCT/EP2009/052248
(87) Internationale Veröffentlichungsnummer: WO 2009/130076

(56) Entgegenhaltungen:
- EP-A- 1 132 742
- DE-A1- 19 506 014
- DE-C1- 19 544 974

## Beschreibung

### Stand der Technik

Die Erfindung betrifft einen Luftdrucksensor zur Aufprallerkennung nach der Gattung des unabhängigen Patentanspruchs.

Von der Anmelderin ist bereits ein Luftdrucksensor bekannt, der als PPS1 vermarktet wird. Dieser Luftdrucksensor misst den Druck in einem-Seitenteil eines Fahrzeugs im sogenannten Nassraum der Türe. Die Tür weist weiterhin einen Trockenraum auf. Der Luftdrucksensor wird an die Trennwand zwischen Nass-und Trockenraum montiert. Dies erfolgt derart, dass entweder sich der Sensorkörper im Trockenraum befindet und der Druckeinlasskanal in den Nassraum hineinragt oder der gesamte Luftdrucksensor wird im Nassraum montiert. Die für die Montage erforderlichen Bohrungen in der Trennwand müssen in den meisten Fällen durch eine am Sensor befindliche Dichtung durch die Montage des Sensors abgedichtet werden. Es sind jedoch auch andere Befestigungsprinzipien bekannt, bei denen dies nicht erforderlich ist wie beispielsweise eine Clipslösung. Weiterhin ist eine Dichtung um den Druckeinlasskanal herum in den meisten Anwendungen erforderlich, bei denen der Drucksensor im Trockenraum montiert ist und der Druckeinlass durch die Trennwand in den Nassraum hineinragt Diese Dichtung wird bei heute bestehenden Luftdrucksensoren durch einen Dichtschaum aufgeklebt oder durch eine angespritzte Dichtung beispielsweise aus Silikon realisiert.

Aus der DE 195 44 974 ist gemäß Oberbegriff des Anspruchs 1 bekannt, ein Steuergerät mit einem Gehäuse mit einem Steckverbinder, und mit einer im Gehäuse angeordneten elektrischen Schaltung mit einem Drucksensor, in dem ein Drucksignal über eine Membran in der Gehäusewandung und den luftgefüllten Innenraum des Steuergeräts dem Drucksensor zugeführt wird. Durch die Verwendung einer gestanzten Struktur als Leiterplatte, die auch Steckerstifte des Steckverbinders enthält, wurden vor allem im Bereich des Steckverbinders die Abmessungen und damit das Innenraumvolumen des Steuergeräts verringert, so dass das Innenraumvolumen nun klein genug ist, um Drucksignale ohne Verluste dem Drucksensor zuzuführen.

Der Luftdrucksensor wird dicht gegen Wasser und Medien ausgelegt, unabhängig vom Einbauort. Dies hat verschiedene Ursachen und bedeutet beispielsweise bezüglich der Fertigung, den Materialanforderungen, sowie der bezüglich den Anforderungen an Prozessor und Prüfung, einen erheblichen Aufwand bei der Herstellung dieser Luftdrucksensoren. Der Luftdrucksensor weist gemäß dem Stand der Technik ein aufwendiges Dichtkonzept auf, da der Luftdruck in den Sensor auf das druckempfindliche Sensorelement zugeführt wird, gleichzeitig aber alle bezüglich Medieneinwirkung und Korrosion anfälligen Bereiche im Luftdrucksensor geschützt werden müssen. Die innere Dichtung wird dabei beispielsweise durch ein im Package integriertes Silikonkissen dargestellt, an welches das Sensormodul angedrückt wird, um eine dichte Anbindung zu erreichen. Um Sensorchips und Bonddrähte zu schützen, wird meist eine Vergelung der Drucksensormembran vorgenommen. Die genannten Maßnahmen stellen einen Aufwand dar und können darüber hinaus auch die Eigenschaften des Sensors beeinflussen. Die Vergelung der Membran beispielsweise bedeutet eine Massebelegung der Membran und verursacht damit eine Beschleunigungsempfindlichkeit und somit einen Störfaktor für den Luftdrucksensor.

### Offenbarung der Erfindung

Der Luftdrucksensor zur Aufprallerkennung mit den Merkmalen des unabhängigen Patentanspruchs hat demgegenüber den Vorteil, dass dieser Luftdrucksensor hermetisch dicht gegen äußere Medien und Einflüsse ist. Insbesondere wird durch das Druckausgleichelement, das den Raum mit dem Sensorelement abdichtet, eine kostengünstige Möglichkeit für die Herstellung des Luftdrucksensors erreicht. Insbesondere ermöglicht diese Ausführung eine einfache und günstige Endmontage des Luftdrucksensors. Dies liegt daran, dass auf eine innere Dichtung die Vergelung der Membran usw. verzichtet werden kann, da dieser Raum, in dem sich das Sensorelement befindet hermetisch dicht ausgelegt wird. Weiterhin ist eine unkomplizierte und einfache Applikation der Luftdrucksensoren möglich. Dies liegt daran, dass eine geringe Empfindlichkeit der Luftdruckssensorfunktion gegenüber eine Verschmutzung erreicht werden kann.

Wesentlich für die Erfindung ist, dass das Druckausgleichelement das Eindringen von Störstoffen, beispielsweise durch eine Eindiffusion in den Raum, indem sich das Sensorelement befindet, sicher verhindert. Die Druckübertragung von außen, also der Luftdruck wie er sich im Nassraum beispielsweise infolge eines Aufpralls verändert, wird durch diese Druckausgleichselemente in den Raum ermöglicht. Dies bedeutet, dass die eigentliche Funktion des Luftdrucksensors weiterhin gewährt wird.

Der Luftdrucksensor ist vorliegend ein Luftdrucksensor, der geeignet ist, Luftdruckerhöhungen infolge eines Seitenaufpralls und der dabei auftretenden Komprimierung des Volumens der Tür zu detektieren. Prinzipiell ist der Luftdrucksensor auch für die Detektion eines Front- oder Heckaufpralls geeignet

Der Raum, in dem sich das Sensorelement zur Erzeugung eines Signals in Abhängigkeit für einen Luftdruck befindet, ist eine Ausnehmung im Sensor in die das Sensorelement eingebracht werden kann. Das Sensorelement ist dabei üblicherweise mikromechanisch hergestellt und weist Membranstrukturen auf, die die Druckmessung infolge eines piezoresistiven Effekts ermöglicht Auch andere elektrische Parameter, wie die Kapazität können zur Messung herangezogen werden. Das Sensorelement wandelt die Luftdruckänderung in ein elektrisches Signal, das dann weiterverarbeitet werden kann.

Das Luftdruckausgleichelement, das beispielsweise aus Kunststoff hergestellt wird, ist vorliegend funktional definiert und soll das Eindringen von Störstoffen in den Raum verhindern, aber eine Druckübertragung in den Raum ermöglichen. Ausprägungen werden gemäß den abhängigen Ansprüchen weiter unten erklärt. Störstoffe sind vorliegend Wasser, Staubpartikel und andere Verschmutzungen und Flüssigkeiten. Auch Gase können hierzu gehören. Die Luftdruckübertragung bedeutet, dass der Luftdruck von außen nach innen weitergegeben wird. Die Problematik, wie diese Luftdruckübertragung geschieht, insbesondere in Bezug auf eine lineare bzw. nicht lineare Übertragung wird weiter unten behandelt.

Durch die in den abhängigen Ansprüchen aufgeführten Maßnahmen und Weiterbildungen, sind vorteilhafte Verbesserungen des im unabhängigen Patentanspruch angegebenen Luftdrucksensors zur Aufprallerkennung möglich.

Vorteilhaft ist es, dass das Druckausgleichelement wenigstens eine Membran ist. Dies bedeutet, dass auch mehrere Membranen das Druckausgleichelement bilden können. Als Membran wird eine Schicht verstanden, die vorliegend die gemäß Patentanspruch 1 definierten Eigenschaften aufweist. Dafür kann die Membran beispielsweise aus Kunststoff bestehen. Eine solche Kunststoffmembran beziehungsweise -folie kann verwendet werden, um das Sensorgehäuse kostengünstig zu verschließen. Ein separater Deckel kann dabei eingespart werden. Die Kunststofffolie kann beispielsweise ähnlich wie ein Label auf Bandmaterial angeliefert und im Fertigungsprozess durch beispielsweise Kleben oder Schweißen auf das Sensorgehäuse befestigt werden. In anderer Ausführungsform kann die Kunststoffmembran integriert im Sensordeckel oder im Sensorgehäuse ausgeführt sein. Die Deckelmontage erfolgt dann unverändert.

Es ist weiterhin möglich, dass ein Teil des Druckausgleichselements semipermeabel ist. Dies gilt auch für den Fall, dass das Druckausgleichselement als Membran ausgeführt ist, wobei die Semipermeabilität die Aufgabe löst, Störstoffe wie Wasser und Staub vom Raum abzuhalten, aber gleichzeitig die Diffusion von Gasen wie Luft in den Raum zuzulassen. Damit kann sich der mittlere Umgebungsdruck auch im Sensorinnenraum einstellen. Damit wird sichergestellt, dass die Antwort des Luftdrucksensors auf eine Druckdifferenz nunmehr eine Funktion des außen anliegenden Druckes ist und nicht abhängig von einmal bei der Produktion eingeschlossenen Druck im Luftdrucksensor selbst Darüber hinaus kann diese Maßnahme die Steigung der Übertragungsfunktion für schnell veränderliche Druckdifferenzen verbessern und auch die notwendige Auflösung im Luftdrucksensor kann aufgrund der verbesserten Kennliniensteigung bzw. aufgrund des reduzierten Arbeitsbereichs für Differenzdrücke optimiert werden, gegenüber einem hermetisch dichten Sensor ohne diese Semipermeabilität. Bei dem hermetisch dichten Luftdrucksensor, bei dem die Membran den Raum lediglich nur abdichtet, wird die Druckübertragungsfunktion nur in einem sehr kleinen Fenster linear sein, aber im übrigen Bereich nichtlinear mit abfallender Steigung hin zu größeren Druckdifferenzen zwischen Innen- und Außendruck.

Der Luftdrucksensor wird vorteilhafterweise so ausgelegt, dass die Kennlinie der Luftdruckübertragung beispielsweise durch ein Lookup-Table (Tabelle) im Luftdrucksensor oder auch im auswertenden System beispielsweise im Steuergerät kompensiert wird und somit vom gemessenen Druckanstieg innen auf den tatsächlichen im Außenraum anliegenden Druckanstieg zurückgeschlossen werden kann. Damit können durch dieses Lookup-Table Nichtlinearitäten kompensiert werden. Diese Nichtlinearitäten beziehen sich auf die Druckübertragungsfunktion. Der Luftdrucksensor selbst weist Elektronik auf, die das Signal, dass das Sensorelement liefert, verstärkt filtert, digitalisiert und vorverarbeitet, sowie zum Steuergerät überträgt. Es ist möglich, dass am Sensor das Steuergerät selbst mitintegriert ist.

Die Druckübertragungsfunktion kann weiterhin dadurch optimiert werden, dass das Sensorvolumen möglichst flach ausgelegt wird, was durch eine die Bedingung erreicht wird, dass der Raum wesentlich breiter als hoch ist. Dadurch kann eine höhere Steilheit der Sensorkennlinie erreicht werden. Ein definierter von außen angelegter Druck bewirkt jeweils eine definierte Auslenkung einer Membran. Damit resultiert eine definierte absolute Volumenänderung, indem das Sensorinnenvolumen flach ausgelegt wird - also bei gleicher Membrangröße möglicht klein gehalten wird - erreicht man, dass eine definierte Druck- und damit Volumenänderung im Sensorinnenraum eine höhere Druckänderung bewirkt.

Vorteilhafterweise kann beim erfindungsgemäßen Aufbau des Luftdrucksensors der Schutz der Bonddrähte sowie der durch den Luftdruck messenden Membranen durch ein Gel entfallen. Weiterhin muss kein aufwendig abgedichteter Druckeinlasskanal im Luftdrucksensor vorgesehen werden, so dass auf Sonderprozesse weitgehend verzichtet werden kann.

Weiterhin ist von Vorteil, dass in der Applikation, also der Anwendung auf den bestimmten Fahrzeugtyp des Luftdrucksensors beim Einbau des Luftdrucksensors auf Gesichtspunkte wie Verschmutzung, den Ablauf von Wasser und Medien nicht oder nicht mehr vergleichbar streng geachtet werden muss, wie es gemäß dem Stand der Technik erforderlich ist

Der als Membran beispielhaft ausgebildete Deckel zum Abdichten des Luftdrucksensors verursacht seinerseits eine Beschleunigungsempfindlichkeit des Sensors ähnlich der entfallenen Gelbelegung der Membran. Heute herstellbare Kunststoffdicken liegen als Beispiel jedoch im Bereich von wenigen 100 Mikrometern, so dass dieser Einfluss vorhanden aber für viele Anwendungen vertretbar ist.

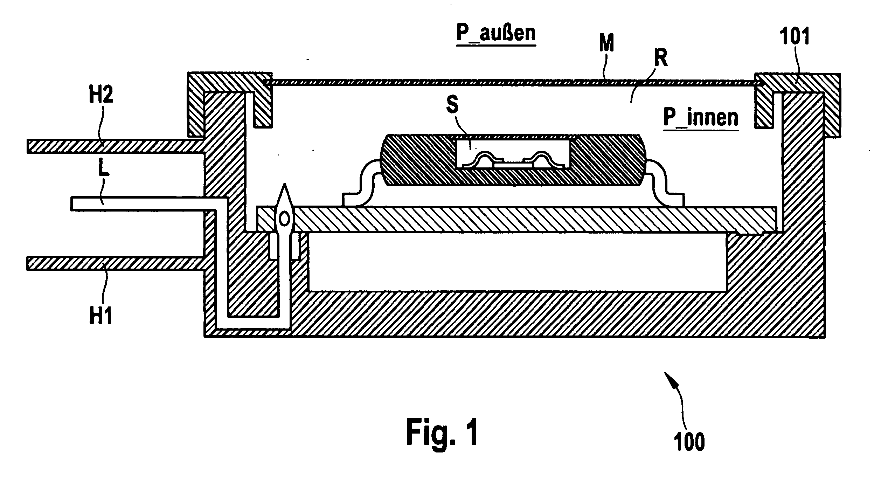

Ausführungsbeispiele sind in den Zeichnungen dargestellt und werden in der nachfolgenden Beschreibung näher erläutert.
Es zeigen Figur 1
   eine erste Querschnittzeichnung eines Gatt: ungsgemäßen Luftdrucksensors,
Figur 2
   eine eines Gatt: Querschnittszeichnung des erfindungsgemäßen Luftdruckssensors,
Figur 3
   ein erstes Beispiel von Druckübertragungsfunktion,
Figur 4
   ein zweites Beispiel für eine Druckübertragungsfunktion,
Figur 5
   ein weites Querschnittsbild eines Gatt: ungsgemäßen Luftdrucksensors,
Figur 6
   ein Blockschaltbild der Elektronik des erfindungsgemäßen Luftdruckssensors und
Figur 7
   der Aufbau eines Personenschutzsystems im Fahrzeug.

Figur 1 zeigt den Gattungsgemäßen Luftdrucksensor 100 schematisch im Querschnitt. Der Luftdrucksensor 100 weist ein Sensorelement S, das mikromechanisch hergestellt ist auf, das im Raum R beispielsweise auf einer Leiterplatte eingebaut ist Dieser Raum R wird definiert durch das Gehäuse des Sensors 100 und die Membran M, die den Raum R gegen äußere Einflüsse hermetisch abdichtet. Im angeführten Beispiel wird der Deckel auf das Sensorgehäuse aufgelegt und anschließend verschweißt oder verklebt Eine Struktur 101 dient der sicheren Justierung des Deckels auf dem Gehäuse.

Im Inneren des Raums R herrscht der Druck P_innen und im Äußeren der Druck P_außen. Wie sich der innere Druck in Abhängigkeit vom äußeren Druck verhält, wird durch die Druckübertragungsfunktion beschrieben, die die Membran M bestimmt Über die Leitung L (Metallkontakte) werden die elektrischen Signale des Luftdrucksensors nach außen geführt und später zum Steuergerät weitergeführt. Die Strukturen H1 und H2 sind Steckerwandungen. Sie sorgen für die sichere Kontaktierung und Halterung des kundenspezifischen Steckers. Der vorliegend skizzierte Sensor 100 kann bei geeigneter Gestaltung der Befestigungslaschen direkt im Nassraum eingebaut werden.

Das Sensorelement S wird sich unter dem im Raum R herrschenden Luftdruck so verändern, dass elektrisch erfassbare Parameter wie der elektrische Widerstand oder eine Kapazität in entsprechender Weise ändern. Das Sensorelement S kann selbst eine Membran- oder eine Fingerstruktur aufweisen.

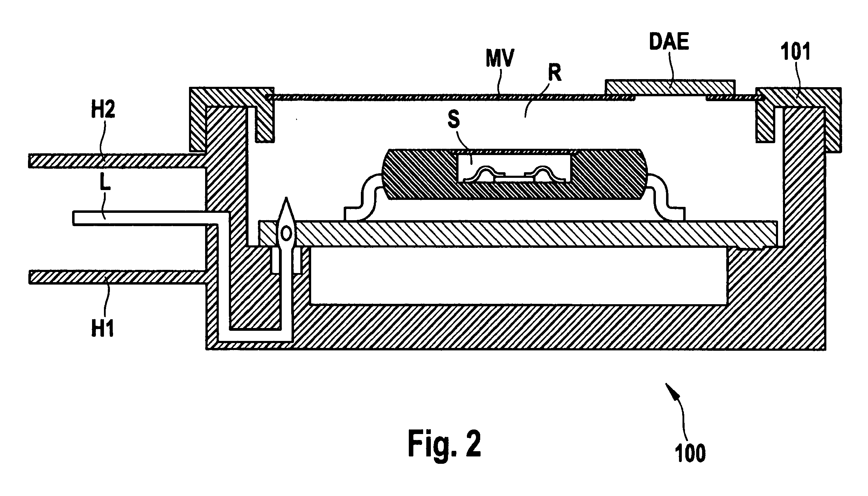

Figur 2 zeigt ein weiteres Beispiel des erfindungsgemäßen Luftdrucksensors. Der Luftdrucksensor 100 weist wiederum ein Sensorelement S auf, das im Raum R angeordnet ist. Wiederum ist die Leitung L und ein kundenspezifischer Stecker (Strukturen H1 und H2) vorhanden. Die Membran MV weist jedoch nunmehr ein DAE auf, d.h. ein Druckausgleichselement. Dieses Druckausgleichselement ist semipermeable und ermöglicht die Einströmung von Gas, wie es Luft ist, durch diese Membran in den Raum R, so dass sich der Druck außen und innen ausgleichen kann.

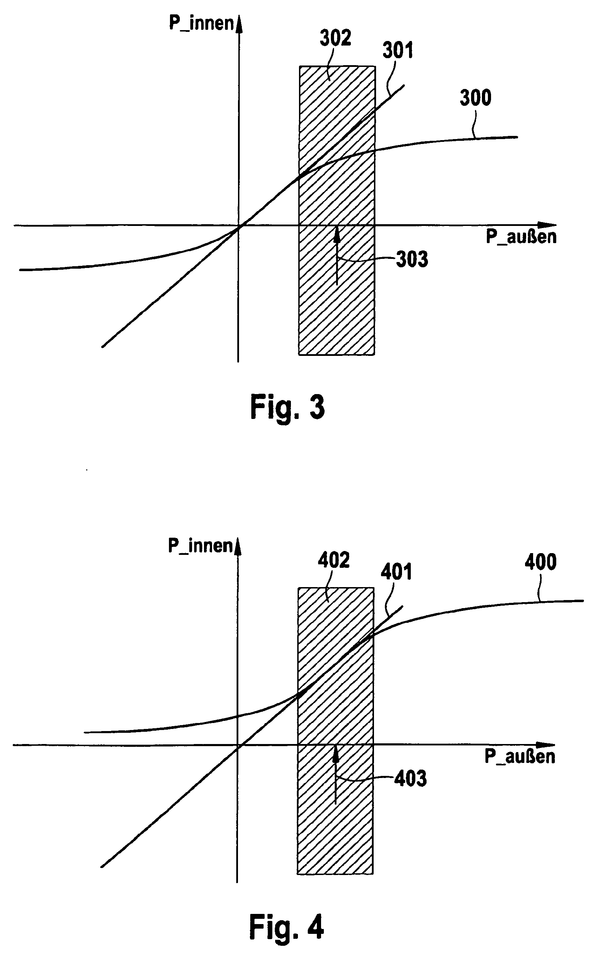

Figur 3 zeigt eine Druckübertragungsfunktion gemäß des Luftdrucksensors von Figur 1. Durch die Kurve 300 wird die Druckabhängigkeit beschrieben, d. h. wie sich der Innendruck in Abhängigkeit vom Außendruck verhält. Die Kurve 301 gibt die Kennlinie der Druckübertragungsfunktion der Membran M an. Der Bereich 302 ist der Arbeitsbereich mit einem mittleren Umgebungsdruck 303. Die Übertragungskennlinie Aussendruck nach Innendruck liegt bei diesem Beispiel so, dass im Arbeitsbereich ein näherungsweise linearer Druckanstieg erfolgt. Allerdings liegt der Arbeitsbereich nicht im Bereich mit maximaler Kennliniensteigerung und damit maximaler Auflösung.

Figur 4 zeigt ein weiteres Diagramm, dass die Druckübertragungsfunktion beschreibt. Wiederum liegt die Kurve 400 vor, die die Abhängigkeit des Innendrucks vom Außendruck darstellt. Durch die Kurve 401 wird die linearisierte Kennlinie beschrieben. Der Einsatz eines Druckausgleichselements DAE bewirkt, dass die Membran des Außengehäuses entspannt ist, weil Innen- und Außendruck im Gleichgewicht sind. Wenn nun externe Druckdifferenzen auftreten, bewirken diese eine maximale Auslenkung der Membran und somit eine maximale Änderung des Innendrucks. Die Sensorauflösung und -genauigkeit kann so optimiert werden, speziell in Fällen, wo der Drucksensor dynamische Druckänderungen messen soll, die ausreichend schnell sind, dass die Semipermeabilität der Membran nur zu einer unwesentlichen Verfälschung der Sensorantwort auf die externe Druckänderung führen kann. Entsprechend Fig. 3 sind mit den Bezugszeichen 402 der Arbeitsbereich und mit 403 der Umgebungsdruck bezeichnet.

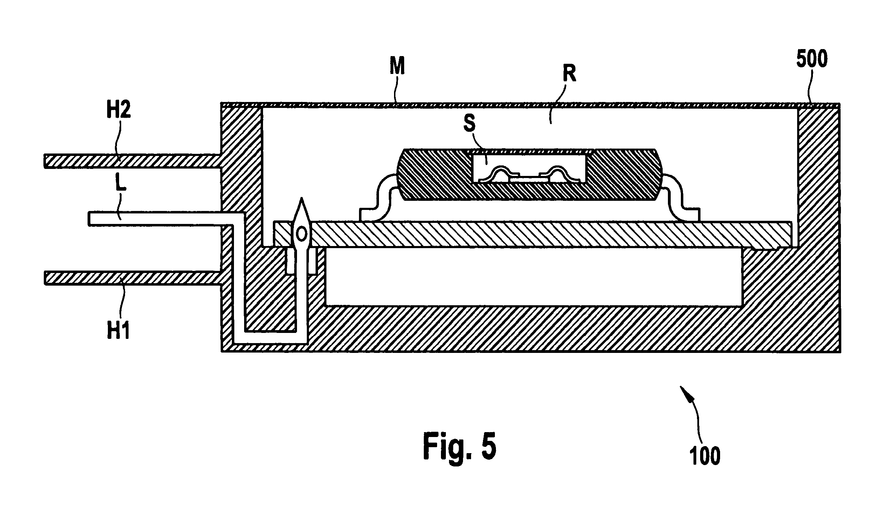

Figur 5 zeigt einen weiteren Querschnitt mit schematischer Darstellung eines Gattungsgemäßen Luftdrucksensors 100. Im Unterschied zu Figur 1 ist vorliegend die Membran nicht im Deckel integriert, sondern die Membran stellt den kompletten Deckel dar. Möglich ist, dass die Membran wie eine Folie auf das offene Gehäuse aufgebracht wird, durch Klebe- oder Schweißprozesse. Die Folie kann vor dem Verdeckelungsprozess oder auch danach auf die erforderliche Größe zugeschnitten werden. Im Unterschied zu Fig. 1 ist die Struktur 500 zur Justierung des Deckels alternativ ausgestaltet.

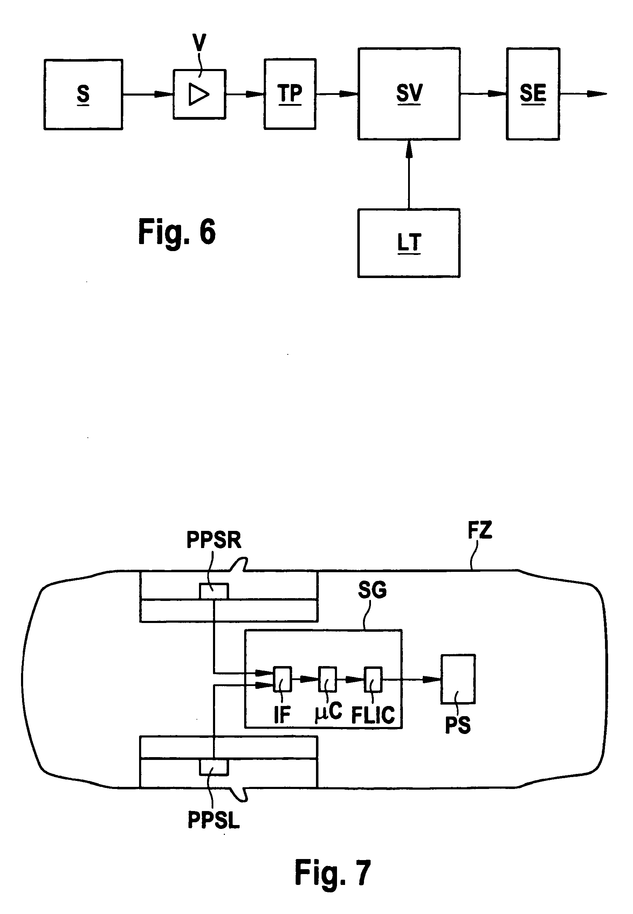

Figur 6 zeigt ein Blockschaltbild der Elektronik des erfindungsgemäßen Sensors. Das Sensorelement S liefert das Signal in Abhängigkeit vom gemessenen Druck an einen Verstärker V, der dieses Signal verstärkt und an einen Tiefpass TP weitergibt Der Tiefpass gefilterte Signal geht in eine Signalverarbeitung SV, die eine Digitalisierung vornimmt und den Wert in Abhängigkeit von geladenen Werten aus dem Lookup-Table LT verändert. Die Signalverarbeitung SV übergibt den digitalisierten Messwert, der korrigiert ist, an die Sendereinheit SE, die diesen Wert in einem vorgegebenen Protokoll an das Steuergerät überträgt.

Figur 7 zeigt ein Personenschutzsystem in einem Fahrzeug FZ. Zwei Luftdrucksensoren PPSR und PPSL sind jeweils in der linken und rechten Fahrzeugtür eingebaut, und zwar im Nassraum, also zur Fahrzeug abgewandten Seite. Diese Luftdrucksensoren PPSR und PPSL sind an eine Schnittstelle IF eines Steuergeräts SG für die Ansteuerung von Personenschutzmitteln angeschlossen. Das Steuergerät SG verarbeitet die Luftdrucksignale mit einem Mikrocontroller µC unter Berücksichtigung eines geladenen Algorithmus und vorgegebenen Parametern. Aus Signalen anderer Sensoren werden hier beispielsweise aus der Plausibilisierung herangezogen. Andere Komponenten sind der Einfachheit halber jedoch nicht dargestellt, da sie nicht zum Verständnis der Erfindung beitragen.

In Abhängigkeit von der Auswertung der Luftdrucksignale überträgt der Mikrocontroller µC an die Ansteuerschaltung FLIC, die beispielsweise elektrische Leistungsschalter aufweist, die die elektrische Energie zu Zündelementen beispielsweise zuführen, um die entsprechenden Personenschutzmittel anzusteuern. Diese werden dann von der Ansteuerschaltung FLIC entsprechend bestromt. Sie sind vorliegend mit den Bezugszeichen PS bezeichnet. Als Personenschutzmittel kommen Airbags, Gurtstraffer usw. in Frage.

## Patentansprüche

1. Luftdrucksensor (100) zur Aufprallerkennung mit einem Raum (R), in dem sich ein Sensorelement (S) zur Erzeugung eines Signals in Abhängigkeit von dem Luftdruck befindet, wobei der Raum (R) durch wenigstens eine Membran(M, MV, DAE) gegen Wasser und Staub abgedichtet ist, wobei die Membran (M, MV, DAE) derart beschaffen ist, dass ein Eindringen von genannten Störstoffen in den Raum (R) verhindert wird, aber eine Druckübertragung von außen in den Raum (R) ermöglicht wird, **dadurch gekennzeichnet, dass** ein Teil (DAE) der Membran (M, MV, DAE) semipermeabel für Gase ist.

2. Luftdrucksensor nach einem der vorhergehenden Ansprüche, **dadurch gekennzeichnet, dass** der Luftdrucksensor (100) ein Kompensationsmittel für eine Kennlinie der Druckübertragung aufweist.

3. Luftdrucksensor nach Anspruch 2, **dadurch gekennzeichnet, dass** die Kompensationsmittel wenigstens ein Lookup-Table aufweisen.

4. Luftdrucksensor nach einem der vorhergehenden Ansprüche, **dadurch gekennzeichnet, dass** der Raum (R) wesentlich breiter als hoch ist.

## Claims

1. Air pressure sensor (100) for impact detection, having a space (R) in which a sensor element (S) for generating a signal on the basis of the air pressure is situated, the space (R) being sealed against water and dust by at least one diaphragm (M, MV, DAE), the diaphragm (M, MV, DAE) being provided such that said disruptive substances are prevented from entering the space (R) but pressure can be transmitted from the outside into the space (R), **characterized in that** part (DAE) of the diaphragm (M, MV, DAE) is semi-permeable to gases.

2. Air pressure sensor according to one of the preceding claims, **characterized in that** the air pressure sensor (100) has a compensation means for a pressure transmission characteristic curve.

3. Air pressure sensor according to Claim 2, **characterized in that** the compensation means have at least one look-up table.

4. Air pressure sensor according to one of the preceding claims, **characterized in that** the space (R) is considerably wider than high.

## Revendications

1. Détecteur (100) de pression d'air destiné à détecter des collisions, et présentant un espace (R) dans lequel est situé un élément de détection (S) qui forme un signal qui est fonction de la pression de l'air,
l'espace (R) étant protégé hermétiquement de l'eau et des poussières par au moins une membrane (M, MV, DAE),
la membrane (M, MV, DAE) étant constituée de manière à empêcher la pénétration desdites substances perturbatrices dans l'espace (R) tout en permettant un transfert de pression de l'extérieur jusque dans l'espace (R),
**caractérisé en ce que**
une partie (DAE) de la membrane (M, MV, DAE) est semi-perméable aux gaz.

2. Détecteur de pression d'air selon l'une des revendications précédentes, **caractérisé en ce que** le détecteur (100) de pression d'air présente un moyen de compensation pour une ligne caractéristique du transfert de pression.

3. Détecteur de pression d'air selon la revendication 2, **caractérisé en ce que** les moyens de compensation présentent au moins un tableau de consultation.

4. Détecteur de pression d'air selon l'une des revendications précédentes, **caractérisé en ce que** l'espace (R) est essentiellement plus large que haut.
